(19) Europäisches Patentamt
European Patent Office
Office européen des brevets

(11) EP 2 323 433 A1

(12) EUROPEAN PATENT APPLICATION

(43) Date of publication:
18.05.2011 Bulletin 2011/20

(51) Int Cl.:
*H04W 16/04* (2009.01)

(21) Application number: 09306104.2

(22) Date of filing: 17.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Alcatel Lucent
75008 Paris (FR)

(72) Inventors:
• Capdevielle, Véronique
91620, NOZAY (FR)
• Feki, Afef
91620, NOZAY (FR)

(74) Representative: Hervouet, Sylvie et al
Feray Lenne Conseil
Le Centralis
63, avenue du Général Leclerc
92340 Bourg-la-Reine (FR)

(54) **A method for sharing a radio frequency band among contending cells**

(57) A method, in a wireless network, for sharing a radio frequency band divided into N sub-bands $SB_i$ for i in [1,N], among contending cells, comprising the steps of:
- determining for a cell a resource allocation pattern, RAP,

- periodically applying said determined RAP for servicing users associated to said cell,
- transmitting said determined RAP to all contending cells.

FIG. 2

**Description**

The technical domain of the invention is the domain of wireless radio access communication networks.

In wireless radio access communication networks, the radio resources are limited comparing to the needs of the cells. A wholly available frequency band is parted into frequency sub-bands identified in frequency and time dimensions. At a given time a cell needs at least one such frequency sub-band to transmit on it. Said allocated frequency sub-band is then scheduled among users attached to said cell, in order to provide communication services to said users. It is primordial to efficiently share the frequency sub-bands among contending cells. The sharing procedure employed highly impacts the performances of the overall functioning of the network. In addition at least one of said sub-band may be unavailable due to allocation to an other radio equipment or to the presence of a scrambler.

To satisfy the ever increasing growth in data traffic, site densification appears as a promising solution. For this purpose, high density of Pico cells are deployed on top of macro coverage's area, thus providing capacity increase.

However, the resulting shared deployments of mixed macro and small/pico/femto cells, in a limited spectrum band generate high level of interference causing cells performance degradation: outage, call dropping, etc.

In such a context, interference has to be managed, efficiently coordinated, through resource sharing mechanisms. Resource sharing mechanisms shall enable contending cochannel cells to select and dynamically update their best suited resource elements to fulfill traffic demands, while minimizing interference to neighbors and guaranteeing fair channel access between contending cells.

A sharing could be achieved, in an efficient manner, with a centralized decision making unit or referee that is in charge of allocating the frequency sub-bands among the different demanding users.

Nevertheless, such a centralized unit is not always possible. In case of absence of such centralized unit, the sharing needs to be performed in a distributive manner between all the cells. Thus, each cell has to decide alone which frequency sub-band/s to select, in order to transmit on it. This selection must however ensure a globally good functioning (fairness) for all contending cells sharing the whole available frequency band.

Another potential solution for distributed radio frequency band sharing is the use of the Carrier Sense Multiple Access with Collision Avoidance, CSMA/CA, known protocol. Said protocol guarantees an efficient sharing between different contending cells on a same radio frequency band, thanks to the use of an appropriate collision avoidance mechanism. The employed procedure makes use of specific messages between different contending cells that indicate the current usage of the channel. A distributed coordination function, DFC, is a MAC technique used in IEEE 802.11 standard with the CSMA/CA protocol. It can also use a virtual carrier sense with RTS/CTS control frames. But, this leads to a prejudicial signalization overhead.

Each cell needs to make a decision on the more appropriate frequency sub-band to use. To this end, the cell makes its decision according to metrics that can be provided mainly through three means:

Reported measurements from users (that is mobile terminals) attached to the cell. In this case, reported measurements, e.g.: radio power received from neighbour cells, are indicators of the potentiality of interference a neighbour cell may cause to the cell.

Sensing measurements. In this case, sensing measurements are made in some or all of the frequency sub-bands, to evaluate their use ratio and the experienced interference on each of them. This sensing process can be made periodically or on demand. This solution allows getting the information needed for the decision. But complexity of sensing operation and inefficiency when sensing leads to traffic interruption. Another prejudicial effect is that collisions may occur when two cells simultaneously sense a same channel as idle.

Information exchanged with neighbour cells. Negotiation between neighbouring cells is an interesting way of achieving the sharing. however such exchanges must remain limited in quantity, and at least much lesser than the one needed by CSMA/CA protocol.

Regarding these three means, and the drawbacks exhibited by the prior art solution, there is a need to find out an efficient solution that optimises the use of the whole available frequency band, while avoiding the previous noted drawbacks.

Another point is to provide a dynamic method able of self optimising the shared allocation. This allows to provide time/frequency channel diversity by varying the allocated sub-bands in time. This also allows to comply with a maybe changing environment (a new cell introduced to reinforce the network, another network deployed on the same area and using at least partially the same frequency band, a new scrambler, ...) .

To this end, the invention proposes a distributed method that steers a cell in the choice of the more appropriate frequency sub-bands to transmit on it.

The object of the invention is a method, in a wireless network, for sharing a radio frequency band divided into N sub-bands $SB_i$ for i in [1,N], among contending cells, comprising the steps of:

- determining for a cell a resource allocation pattern, RAP, in the form of a matrix of N lines and P columns, each line i corresponding to a sub-band $SB_i$ for i in [1,N], each column j corresponding to a time slot $TS_j$ for j in [1,P], each term RAP (i, j) being a boolean equal to a first value, e.g. '1' or 'true', if sub-band $SB_i$ is allocated to said cell during time slot $TS_j$ and else being equal to a second value, e.g. '0' or 'false',

- periodically applying said determined RAP for servicing users associated to said cell, with a period $TM$ equal to

$$TM = \sum_{j=1}^{P} Ts_j \; ,$$

- transmitting said determined RAP to all contending cells, if the determining step has modified it.

According to another feature of the invention, the determining step further comprises:

- choosing preferably a RAP with at least $M_{min}$ terms per column equal to the first value, with $1 \leqq M_{min} \leqq N$.

According to another feature of the invention, the determining step further comprises:

- choosing a RAP with at most $M_{max}$ terms per column equal to the first value, with $1 \leq M_{min} \leq M_{max} < N$.

According to another feature of the invention, $M_{min}$ is indicative of the bandwidth need of the cell for servicing its associated users, and is dynamically updated.

According to another feature of the invention, the determining step further comprises:

- recovering the RAPs of contending cells,
- choose a RAP in function of the RAPs of contending cell.

According to another feature of the invention, the determining step further comprises:

- sorting the contending cells in K non overlapping groups $G_k$, with k in [1,K], where $G_1$ contains the most interfering cells, where $G_k$ contains cells lesser interfering than the ones of $G_{k-1}$ but more interfering than the one of $G_{k+1}$, and where $G_K$ contains the least interfering cells,

- choose preferably a RAP orthogonal to the RAPs of $\displaystyle\bigcup_{k=1}^{z} G_k$ , , with the highest possible z.

*k=1*

According to another feature of the invention, the sorting step further comprises:

- measuring a respective radio power value $W$ received from each respective contending cell,
- comparing said received radio power value $W$ to K thresholds $S_k$, ordered in descending order, with k in [1,K], each respectively associated to one group $G_k$, a contending cell being sorted in group $G_k$ when its corresponding received radio power value $W$ verify $S_{k-1} \geq W \geq S_k$.

According to another feature of the invention, the measuring step is done by at least one user associated to said cell.

According to another feature of the invention, the measuring step is done by said cell itself.

According to another feature of the invention, the determining step is applied again upon:

- a modification of the value of $M_{min}$,
- a reception of a modified RAP from a contending cell, or
- a detection of a degradation of service on an allocated sub-band $SB_i$.

A first advantage of the invention is that it provides an optimized sharing of the whole available frequency band among contending cells, without the necessity of using a centralized referee.

Another advantage of the invention is that it provides an optimized sharing of a frequency band, without the need of explicit sensing measurements over the frequency band.

Another advantage of the proposed method is that it uses coordination information exchanged between cells, with a rather limited throughput.

Another advantage of the invention is that it provides a global self adaptive solution to the problem of resource sharing, performed in a distributed manner.

Others features, details and advantages of the invention will become more apparent from the detailed illustrating description given hereafter with respect to the drawings on which:

- figure 1 shows two contending cells sharing access to a same frequency band,
- figure 2 shows a resource allocation pattern, RAP, on a frequency/time diagram.

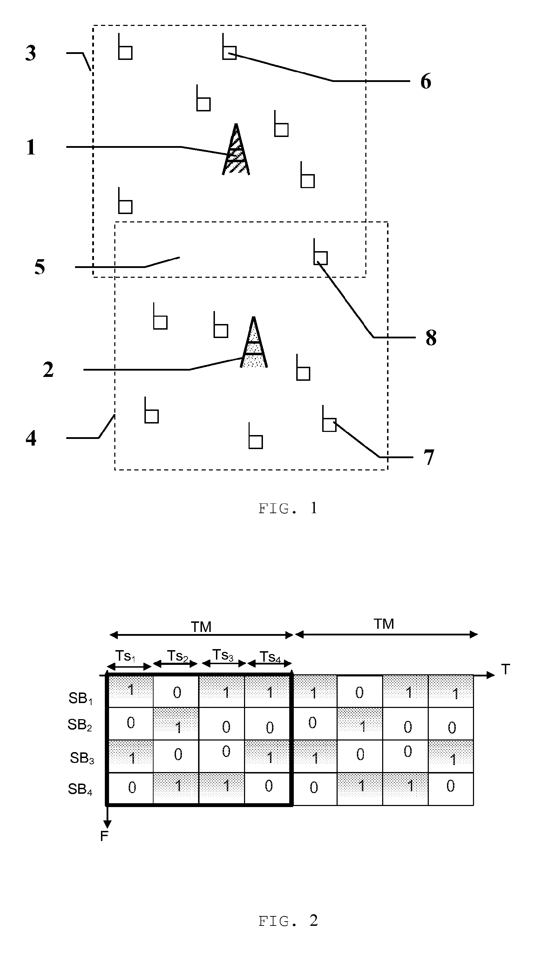

In a wireless radio network space is parted in geographical area cells. As shown in figure 1, two such area cells 3, 4 are figured. For each area cell 3, 4, a base station 1, 2 in is charge of providing radio communications to users/ mobile terminals 6, 7, 8 present in the area cell 3, 4. Mobile terminal 6, present in area cell 3, can then establish a radio link with base station 1, in order to connect to the network.

A base station 1, 2 is in charge of covering one area cell 3, 4. Since the radio range of a base station 1, 2, generally coincides with the area cell geographical boundary 3, 4, a base station 1, 2 is often, abusively, called a cell.

In order to fully cover a given spatial area, there must be overlap 5, in between area cells 3, 4. In order not to create interferences in that overlap 5, two neighbouring cells 1, 2, must not use frequencies in common. Furthermore, a mobile terminal 8 may be in said overlap 5. It can then be serviced by any one of the two cells 1, 2.

In order to solve the allocation problem, the whole frequency band available to cells 1, 2, is parted in N sub-bands $SB_i$. Said partition does not necessarily provide sub-bands of equal widths. The number N of sub-bands $SB_i$ and their width characteristics are determined so that a cell 1, 2, can use said sub-band $SB_i$ to service users 6, 7, 8 present in its range cell 3, 4 and associated with it.

One important point of the invention is that it is distributed, in that each cell 1, 2, has to decide which sub-band $SB_i$ to use at next time slot $Ts_j$, with communication with other cells as limited as possible and sensing as limited as possible.

Moreover, the method is dynamic, always updating said information, and then adaptive. This is advantageous, since the radio environment may change, due e.g. to the settling of a new cell or the appearance of a scrambler.

Another important point of the invention is to avoid, or at least to limit, the use of sensing measurement, in order to increase the time during which a cell 1, 2, is functionally operational and transmitting.

For all these reasons, the invention proposes a method based on the determining on each cell side of a resource allocation pattern, RAP, periodically used to indicate which sub-band(s) to use to service the attached users 6, 8, of said cell 1.

Thus the method according to the invention shares a radio frequency band divided into N sub-bands $SB_i$, for i in [1,N], among contending cells 1, 2 by successively applying the following steps. A cell 1 determines, alone and for itself, a resource allocation pattern, RAP. Such a RAP, exemplarily illustrated at figure 2, indicates which sub-band(s) among the N sub-bands SB_i is/are allocated to said cell 1. In order to provide diversity in time, several possibilities of sub-bands allocation are retained and varied over time in a periodical manner. One way of figuring it is to represent said RAP in the form of a matrix of N lines and P columns. On figure 2, N=P=4. In said RAP matrix each line i corresponds to a sub-band $SB_i$ for i in [1,N], and each column j corresponds to a time slot $Ts_j$ for j in [1,P]. So doing, each term RAP (i, j), containing a Boolean value, defines the allocation of sub-band SB_i during time slot $Ts_j$ and is equal to a first value, e.g. 1 or true, if sub-band SB_i is allocated to said cell during time slot $Ts_j$ and else is equal to a second value, e.g. 0 or false. In other words, the resource element RAP(i,j) indicates that $SB_i$ is allocated to cell 1 and made available to scheduled users 6, 8, during $Ts_j$ if RAP(i,j)=1. It is frozen otherwise: when RAP(i,j)=0, and is thus available to other contending cells 2.

Once determined, said RAP is periodically applied by the cell 1, using the allocated sub-band(s) SB_i during time slot $Ts_j$ to service users 6, 8, associated to said cell 1. Since there is P time slots $Ts_j$, and the first being applied again just after the last, the period *TM* is equal to $TM = \sum_{j=1}^{P} Ts_j$, and is also the total time length of the RAP.

In order to obtain an optimisation of the sharing of the frequency band between contending cells 1, 2, once a RAP is determined by a cell 1, said determined RAP is advantageously transmitted to all contending cells, preferably only when it has been modified. This allows allocation information to be exchanged between contending cells 1, 2, and only creates a small throughput, since RAPs provide very condensed information, and are not so often exchanged.

Such information exchange may be done using any known media. It may be radio media or wire media. It may be done using any of a data plane or a signalling plane, and can use any protocol. A possible way of exchanging data between cell, in the case of a small/femto/pico cells network such as an LTE network is e.g. by X2 interface.

Preferably, the determining step further comprises choosing a RAP verifying a first constraint of at least $M_{min}$ terms per column equal to the first value. Per time slot $Ts_j$, a minimum number $M_{min}$ of sub-bands has to be allocated to guarantee target performance level.

$M_{min}$ is at least equal to 1, since a minimum service must always be provided. At least even if no user 6, 8, is present in the cell's area, signalling transmission may be used. Of course $M_{min}$ is at most equal to the max number $N$ of sub-bands $SB_i$. This first constraint guarantees that the cell 1 would be allocated a number of sub-bands $SB_i$ sufficient to answer to the demand from the attached users 6, 8.

Preferably, the determining step further comprises choosing a RAP verifying a second constraint of at most $M_{max}$ terms per column equal to the first value. $M_{max}$ is superior to and at least equal to $M_{min}$. This second constraint ensure that the cell 1 will not jeopardize all the sub-bands $SB_i$ of the frequency band at any time slot $Ts_j$, thus allowing other contending cells to get access to the radio resource and contributing to a fair sharing. Thus $M_{max}$ is strictly inferior to $N$.

In one advantageous embodiment of the invention, $M_{min}$ is taken indicative of the bandwidth need of the cell 1 for servicing its associated users 6, 8. Since said need may vary over time, e.g. depending on the number of present users associated with cell 1, $M_{min}$ is dynamically updated. Each time the value of $M_{min}$ changes, the RAP of cell 1 is preferably determined again.

Until here in the description, RAP has been determined by any method. One possible method may be a random generation. Another method may be to generate all the possible RAP matrixes, applying a given constraint by removing all non satisfying matrixes, and then randomly select one RAP among the remaining candidates.

In order to optimize the frequency band sharing among contending cells 2, one preferential embodiment, when communication between neighbouring/contending cells 2 of cell 1 is available, may include a step of recovering the RAPs of contending cells. Then a RAP is chosen for cell 1 in function of the RAPs of contending cells 2. The recovering may be done by any communication medium/protocol. It can be on demand or periodical. Cell 1 may ask the RAP, or contending cells 2 may transmit it on its own.

The set of neighbour cells 2 of a given cell 1 contains all cells 2 that are located around said cell 1 within a distance lesser than the usual radio range used by all cells.

The set of contending cells 2 of a given cell 1 contains all cells 2 that are using/sharing the same frequency band and whose radio power as perceived by said cell 1 is sufficient to cause interference to cell 1.

Both sets are generally the same but not necessarily. Said contending/neighbour cells 2 of a given cell 1 may be known to cell 1 by a priori knowledge of network topology provided and updated whenever a new cell is settled.

Said contending/neighbour cells of a given cell 1 may also be known by sensing. In that case a cell 2 is "located" by a value of radio power received/measured, said value being indicative of a distance between cell 2 and cell 1. As is known, the radio signal from such a cell 2, contains identifying elements detectable by a measurer.

The radio power value may be measured by the cell 1. Alternately said value may be measured by anyone of the users 6, 8, associated to cell 1, and then transmitted back to said cell 1.

A preferential way of taking into account the RAPs of contending/neighbouring cells comprises the following steps. First, contending cells 2 are sorted in K non overlapping groups $G_k$, with k in [1,K]. Said groups are ordered so that, the first group $G_1$ contains the most interfering cells, the second group $G_2$ contains the next most interfering cells not contained in $G_1$, and so on until $G_K$ which contains the least or not interfering cells. The ordering is such that $G_k$ contains cells lesser interfering than the ones of $G_{k-1}$ but more interfering that the one of $G_{k+1}$.

Based on these groups $G_k$, a RAP is chosen that is preferably orthogonal to at least $G_1$, while respecting the previous first and second constraint with respect to $M_{min}$, and $M_{max}$. Among the maybe several RAPs orthogonal to $G_1$ and respecting both constraints, a RAP is, if possible, chosen that is also orthogonal to $G_2$ (that is orthogonal to $G_1 \cup G_2$) and still respecting both constraints. The step is iterated, trying to choose, if possible, a RAP also orthogonal to $G_3$ (that is orthogonal to $G_1 \cup G_2 \cup G_3$) and still respecting both constraints. Then $G_4$, and so on until $G_z$, with z highest possible, possibly equal to K, that is finally at least one RAP orthogonal to the RAPs of $\bigcup_{k=1}^{z} G_k$ , with the highest possible z and still respecting both previously mentioned constraints. If several RAPs satisfying all constraints are found, one may be chosen randomly.

So doing, RAP is computed in order to limit collisions with contending cells 2, and at least with the most harmful interfering cells placed in $G_1$, that is the cells for which the radio power received is maximum or the cells located closest to said cell 1. If at least one RAP solution may be found, the constraint level is raised to also limit collisions with cells placed in $G_2$, then $G_3$ and so on.

RAP of the considered cell 1 is computed in such a way that collisions with the resources currently used by the most interfering cells are minimized.

In addition, it is worthwhile to mention that ensuring minimum interference to a group $G_k$ of cells for the choosing of the RAP matrix of cell 1 can be traduced mathematically by searching the matrix RAP that minimizes the distance to the space defined by the set of vectors ($RAP_1$, $RAP_2$, $RAP_3$) corresponding to the cells contained in this group $G_k$, on a time slot basis. This could be envisaged as the minimization of a projection over this space.

An illustrative RAP computation is provided hereafter. For each time slot $Ts_j$ in period $TM$, that is for each $Ts_j$, 1<=j<=P:

Compute the vector RAP ( :,$Ts_j$ ) with at least $M_{min}$ (and at most $M_{max}$ ) elements equal to '1'.

Minimize interference (complete orthogonality) between the cell 1 and $G_1$ cells while ensuring minimum $M_{min}$ (and maximum $M_{max}$ ) allocated sub-bands.

RAP ( :,$Ts_j$ ) is computed so that the distance of RAP ( :,$Ts_j$ ) vector to the space generated by the RAP vectors associated to the n most interfering cells gathered in $G_1$

S_$G_1$={$RAP_1$ ( :,$Ts_j$ ) ,...., $RAP_n$(:,$Ts_j$ )} is minimized, with the constraint : $M_{min}$ <=Norm (RAP ( :,$Ts_j$)) <=$M_{max}$ .

If perfect orthogonality is ensured between RAP and S_$G_1$ and if $M_{min}$<=Norm(RAP(:, $Ts_j$)) <=$M_{max}$ then RAP is re-computed so as to minimize the distance towards S_ $G_2$, the space generated by the RAP vectors associated to the $G_1UG_2$ interfering cells.

However, if no RAP can be found that is at least orthogonal to $G_1$ while respecting both constraints, a suboptimal RAP matrix is computed. This is done by leveraging one of the computation constraints.

For example, orthogonality is guaranteed to only a subset of $G_1$, while maintaining the numbers $M_{min}$ and $M_{max}$ of allocated sub-bands. This subset may be a random selection of $G_1$ cells.

An example of computation can be the following. $G_1$' is a subset of $G_1$. At start $G_1$' is equal to $G_1$.

Repeat

Computes RAP(:,$Ts_j$) that minimizes the distance of RAP ( :,$Ts_j$ ) to S_$G_1$' , the space generated from RAP vectors associated to $G_1$' cells, with at least $M_{min}$ and at most $M_{max}$ allocated sub-bands.
If RAP ( :,$Ts_j$ ) is orthogonal to S_$G_1$' then finish.
Else $G_1$'=$G_1$' minus one randomly removed cell.
End Repeat.

The number K of groups may be any number. However a practical number of 2 may be advantageously used.

The classification of cells into group $G_k$ can be realized through clustering operation.

Either it can be realized by comparing a perceived interference figured by a radio power measured from each neighbor cell 2 to a predefined power threshold.

This can e.g. be done the following way. A respective radio power value $W$ received from each respective contending cell is measured. Said received radio power value $W$ is then compared to K thresholds $S_k$, with k in [1,K]. A threshold $S_k$ corresponds to each group $G_k$. For instance said thresholds $S_k$ may be ordered in descending order, a radio power value $W$ is then compared successively to the thresholds $S_k$, until it is framed by two such thresholds, that is it verify $S_{k-1} \geq W \geq S_k$. The contending cell whose received radio power is equal W is then sorted in group $G_k$.

A scanning or measuring of radio power can be done at least in two ways. First, it can be measured by at least one user 6, 8, associated to said cell 1. Second, it can be measured by said cell 1 itself. Sensing measurements could also be operated by another cell or any other mean and then transmitted back to the cell 1.

Since the method is dynamic, the determination of the RAP of said cell 1 is advantageously recomputed as soon as a change is detected at cell 1 level. Such a change can be detected by: a modification of the value of $M_{min}$ ($M_{max}$ is preferably a constant), a reception of a modified RAP from a contending cell 2 (that just updated its own RAP), or a detection of a degradation of service on an allocated sub-band.

Such a degradation may be detected e.g. by the protocol used when servicing the associated users 6, 8, either the cell 1 or the users 6, 7, 8 detecting/reporting transmission problems.

Said degradation detection allows the method to cope with event that can not be forecast, e.g. the apparition of a scrambler or another environment perturbation.

The one skilled in the art would recognize that a synchronisation between contending cells is advantageous. All contending cells must have at least their processing synchronized on a time slot $Ts_j$ basis, that is said time slots respective cells start together. A period $TM$ basis synchronisation is even preferable, in order to simplify the orthogonality computations between RAPs.

Since the method is advantageously distributed and since each cell may determine its RAP and its allocation on its own, it is self organising. The method is thus well adapted to small cell networks (femto/pico/LTE/etc) that are deployed without any central referee unit.

Such a small cell network is generally used to provide densification to already existing macro cells. Such macro cells are characterized by higher distances and powers used. Depending on the somewhat future norms, small cells may at least partially reuse the same frequency band a macro cells. Interferences may then arise. However, macro cells, first present must not be interfered by small cells. The method described may treat the macro cells in two different way.

If macro cells can be upgraded, they can also manage a RAP, which may be communicated to contending small cells. If existing macro cells can not be modified, they are treated by small cell as scrambler, whose radio power is detected by perturbation caused and/or by scanning/sensing. Once detected, the sub-bands thus used by a macro cell are neutralized by zeroing the at least one corresponding lines of the small cell's RAP. This is eased and there is no synchronisation problem because a macro cell generally uses the same sub-band(s) over time.

**Claims**

1. A method, in a wireless network, for sharing a radio frequency band divided into N sub-bands $SB_i$ for i in [1,N], among contending cells (2), ***characterized in that*** it comprises the steps of:

   - determining for a cell (1) a resource allocation pattern, RAP, in the form of a matrix of N lines and P columns, each line i corresponding to a sub-band $SB_i$ for i in [1,N], each column j corresponding to a time slot $Ts_j$ for j in [1,P], each term RAP (i, j) being a boolean equal to a first value, e.g. '1' or 'true', if sub-band $SB_i$ is allocated to said cell during time slot $Ts_j$ and else being equal to a second value, e.g. '0' or 'false',

   - periodically applying said determined RAP for servicing users (6, 8) associated to said cell (1), with a period $TM$ equal to $TM = \sum_{j=1}^{P} Ts_j$,

   - transmitting said determined RAP to all contending cells (2), if the determining step has modified it.

2. The method of claim **1**, wherein the determining step further comprises:

   - choosing preferably a RAP with at least $M_{min}$ terms per column equal to the first value, with $1 \leq M_{min} \leq N$.

3. The method of claim **1** or **2**, wherein the determining step further comprises:

   - choosing a RAP with at most $M_{max}$ terms per column equal to the first value, with $1 \leq M_{min} \leq M_{max} < N$.

4. The method of any one of claims **1** to **3**, wherein $M_{min}$ is indicative of the bandwidth need of the cell (1) for servicing its associated users (6, 8), and is dynamically updated.

5. The method of any one of claims **2** to **4**, wherein the determining step further comprises:

   - recovering the RAPs of contending cells (2),
   - choose a RAP in function of the RAPs of contending cell (2).

6. The method of claim **5**, wherein the determining step further comprises:

   - sorting the contending cells (2) in K non overlapping groups $G_k$, with k in [1,K], where $G_1$ contains the most interfering cells, where $G_k$ contains cells lesser interfering than the ones of $G_{k-1}$ but more interfering than the one of $G_{k+1}$, and where $G_K$ contains the least interfering cells,

   - choose preferably a RAP orthogonal to the RAPs of $\bigcup_{k=1}^{z} G_k$, with the highest possible z.

7. The method of claim **6**, wherein K = 2.

8. The method of claim **6** or **7**, wherein the sorting step further comprises:

- measuring a respective radio power value $W$ received from each respective contending cell (2),
- comparing said received radio power value $W$ to K thresholds $S_k$, ordered in descending order, with k in [1,K], respectively associated to one group $G_k$, a contending cell being sorted in group $G_k$ when its corresponding received radio power value W verify $S_{k-1} \geq W \geq S_k$ .

9. The method of claim **8**, wherein the measuring step is done by at least one user (6, 8) associated to said cell (1).

10. The method of claim **8** to **9**, wherein the measuring step is done by said cell (1) itself.

11. The method of any one of claims **5** to **10**, where the determining step is applied again upon:

- a modification of the value of $M_{min}$,
- a reception of a modified RAP from a contending cell (2), or
- a detection of a degradation of service on an allocated sub-band $SB_i$ .

FIG. 1

FIG. 2

Europäisches
Patentamt

European
Patent Office

Office européen
des brevets

# EUROPEAN SEARCH REPORT

Application Number

EP 09 30 6104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 104 391 A1 (NTT DOCOMO INC [JP]) 23 September 2009 (2009-09-23) * paragraph [0013] * * paragraphs [0043], [0044], [0046], [0047] - [0052]; figures 2,3,5 * * paragraphs [0055], [0056] * * paragraphs [0032], [0035], [0039] * * paragraphs [0062], [0066] * ----- | 1-11 | INV. H04W16/04 |
| Y | WO 2007/053954 A1 (NORTEL) 18 May 2007 (2007-05-18) * page 10, lines 19-26 * * page 71, lines 9-29 * ----- | 1-11 | |
| A | WO 98/44754 A2 (NOKIA TELECOMMUNICATIONS OY [FI]; RINNE MIKA [FI]; RINNE MIKKO [FI]; S) 8 October 1998 (1998-10-08) * abstract * ----- | 1-11 | |

| | | | TECHNICAL FIELDS SEARCHED (IPC) |
|---|---|---|---|
| | | | H04W |

The present search report has been drawn up for all claims

| Place of search | Date of completion of the search | Examiner |
|---|---|---|
| Munich | 20 April 2010 | Mele, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 6104

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2010

| Patent document cited in search report | | Publication date | Patent family member(s) | | Publication date |
|---|---|---|---|---|---|
| EP 2104391 | A1 | 23-09-2009 | JP 2009232464 | A | 08-10-2009 |
| WO 2007053954 | A1 | 18-05-2007 | US 2009303918 | A1 | 10-12-2009 |
| WO 9844754 | A2 | 08-10-1998 | AT 274780 | T | 15-09-2004 |
| | | | AU 735038 | B2 | 28-06-2001 |
| | | | AU 6502398 | A | 22-10-1998 |
| | | | CN 1251731 | A | 26-04-2000 |
| | | | DE 69825878 | D1 | 30-09-2004 |
| | | | DE 69825878 | T2 | 08-09-2005 |
| | | | EP 0972417 | A2 | 19-01-2000 |
| | | | FI 971328 | A | 28-09-1998 |
| | | | JP 2001516541 | T | 25-09-2001 |
| | | | NO 994672 | A | 24-09-1999 |
| | | | US 6259685 | B1 | 10-07-2001 |

EPO FORM P0459

For more details about this annex : see Official Journal of the European Patent Office, No. 12/82